Europäisches Patentamt

European Patent Office

Office européen des brevets

(11) Publication number: **0 340 406**
**A1**

(12) **EUROPEAN PATENT APPLICATION**

(21) Application number: **89103700.4**

(22) Date of filing: **03.03.89**

(51) Int. Cl.4: **G05D 1/03 , B62D 1/28**

The title of the invention has been amended (Guidelines for Examination in the EPO, A-III, 7.3).

(30) Priority: **10.03.88 IT 2892588 U**

(43) Date of publication of application:
**08.11.89 Bulletin 89/45**

(84) Designated Contracting States:
**BE CH DE ES FR GB IT LI NL SE**

(71) Applicant: **BALLOTTI SISTEMI S.r.L.**
**Via G. Verdi 15**
**I-41018 San Cesario sul Panaro (Modena)(IT)**

(72) Inventor: **Zanoli, Enzo**
**Via Modenese 314/C**
**I-41018 San Cesario sul Panaro Modena(IT)**

(74) Representative: **Gardi, Giuliano**
**Gardipatent Palazzo Prora 605, Via Giardini**
**I-41100 Modena(IT)**

(54) **Automatic guidance system for transport trucks using overhead retroreflector strip control.**

(57) The guidance system comprises a laser unit (6), installed on the truck (1) forward and/or at rear in relation to the direction of movement, connected radially to the steering gear and capable of movement through a horizontal arc; the beam (F) is directed at a reflecting surface embodied as a retroreflecting strip (13) of given width suspended overhead at a convenient height (H), 5 metres or more from ground level, in a layout that mirrors the route to be followed by the truck and and incorporates turnouts (S1, S2) and crossings (I) equipped with means designed to route the truck (1).

Fig.1

**An automatic guidance system for internal transport trucks in industry, using overhead retroreflector strip control, and a relative truck**

The invention relates to an automatic guidance system for an internal transport truck as used in industry, featuring control by way of an overhead retroreflector strip, and to a relative truck: that is, a system by which to operate the steering gear of a truck comprising a carrying platform with swivel wheels, in which use is made of a retroreflecting strip, installed overhead along the route to be followed by the truck; the truck also constitutes subject matter of the invention.

The prior art comprises automatic guidance systems in which trucks are guided by a wire, embedded in the floor and designed to emit electric signals, and systems making use of a retroreflector strip stuck to the floor with adhesives. In the first type of system mentioned, the truck is provided with a support connected to the steering gear and carrying antennas that pick up the electric signals from the wire, whereas in the second, use is made of phototransistors or a laser emitter to measure the distance separating the truck from the strip; a system has also been designed in which the truck is guided by retroreflectors distributed along a wall at a short distance from the floor.

The automatic guidance systems mentioned are beset by certain drawbacks: the embedded wire type cannot be used where metal grilles are let into the floor, or where the floor itself cannot be drilled or cut, or in areas where there are lifts installed; the floor-mounted retroreflecting strip type can be used only where a floor remains free of other equipment or pedestrian traffic, otherwise the strip will wear quickly and accumulate dirt. The wall-mounted retroreflector system utilizes a complex laser emitter that is difficult to install, as well as involving laborious programming and high costs, so that a package offering all-round advantages has not yet been developed.

Moreover, it is notably difficult in these prior art guidance systems, if not altogether impossible, to incorporate turnouts and crossings along the route followed by the truck.

The prior art thus stands in need of improvement, to the end of overcoming the drawbacks mentioned above.

It will be discerned from the foregoing that the requirement exists for an automatic guidance system of uncomplicated design that is simple and swift to install, and durable, that works in an advantageous way and will readily permit of incorporating turnouts and crossings along the path followed by the truck.

The requirement in question is met, according to the invention, with a system in which a laser emitter is installed at the back and/or the front end of the truck, in relation to the direction of propulsion, connected radially with the steering gear and capable of movement along a horizontally disposed bowed slot; the laser beam is directed vertically at a reflecting element embodied as a retroreflector strip of predetermined width suspended as much as 5 m and more above ground level and describing a path identical, when considered in plan, to that which must be followed automatically by the truck.

In practical application, markedly satisfactory results have been given by the LASERNET, a notably accurate unit made by ACME CLEVELAND Co. of Ohio, U.S., marketed recently in Italy by NAMCO CONTROLS.

Advantages afforded by the invention: greater effectiveness in operation; elimination of links with floor and/or wall mounted components; improved accuracy in measurement of the distance and the angle of transverse movement, from and in relation to the retroreflecting strip; truck speed of 70 m/min and higher; bends negotiable at less than 1 m radius, and down even to 0.5 m; the ability to handle sudden changes in direction, even at angles greater than 45° and speeds higher than 40 m/min and more; the facility of incorporating turnouts and crossings into the layout; safe and sure manoeuvre from route to route; facility of generating additional control signals, such as for speed change, by enlarging the retroreflecting strip at prescribed locations; limited strip width, e.g. 2.5 cm; ability of truck to regain alignment even when some tenthsof centimetres off-course in relation to strip layout; continued cleanliness of retroreflecting strip, hence retention of operating specifications; no obstructions at working heights.

The invention will now be described in detail, by way of example, with the aid of the 5 accompanying sheets of drawings, in which:

fig 1 is the side elevation of an automatically propelled truck, generally considered, operating in conjunction with a retroreflecting strip carried by a support raised from ground level and affording a medium by which a laser beam emitted from the truck can rebound vertically;

fig 2 is a plan of the truck in fig 1;

fig 3 is a view from above showing a laser emitter associated with the truck steering gear, viewed in enlarged scale and partially cutaway;

fig 4 is the longitudinal and vertical section through IV-IV in fig 3;

figs 5 and 6 are plans of a truck controlled by two retroreflecting strips of different geometry: the first describing a radiused right angle bend, the second a dog-legged right angle bend;

fig 7 is a view of the truck along the longitudinal axis, illustrating the transverse oscillation of which the laser beam is capable;

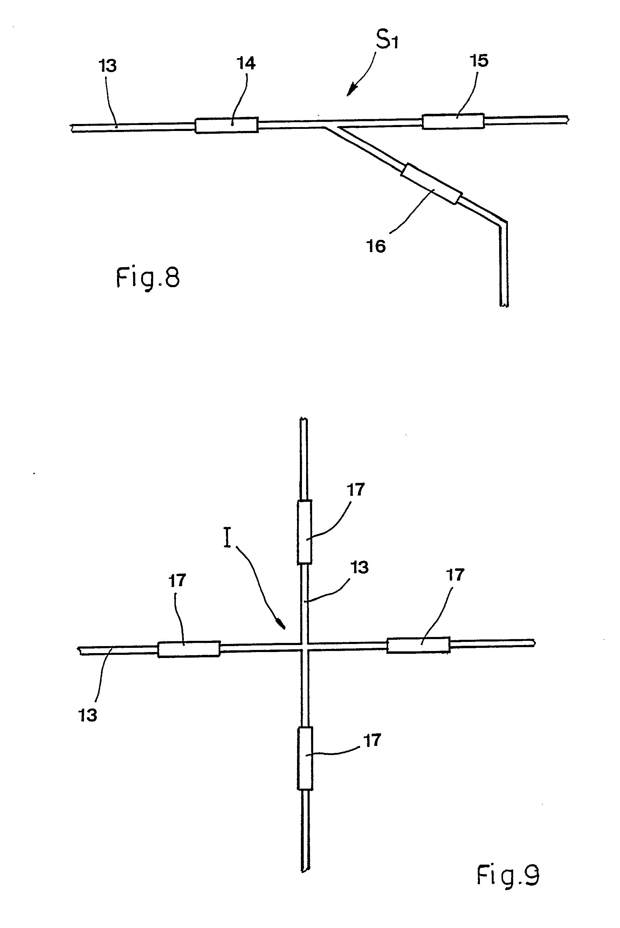

fig 8 illustrates a stretch of the retroreflecting strip incorporating a turnout, viewed from beneath;

fig 9 illustrates a part of the retroreflecting strip layout incorporating a right angle crossing, viewed from beneath;

fig 10 illustrates a stretch of the retroreflecting strip incorporating a second type of turnout, viewed from beneath, of which the two stretches immediately down-line are rotatable through 90°;

fig 11 is a perspective of a detail of one of the two rotatable stretches illustrated in fig 10.

With reference to the drawings, 1 denotes the body of an automatically propelled truck exhibiting steered wheels 2, a load platform 3, and fenders 4; 5 denotes a protective cowling designed to house a laser emitter 6, and provided with a bowed slot 7 to enable passage of the vertically directed and transversely mobile laser beam.

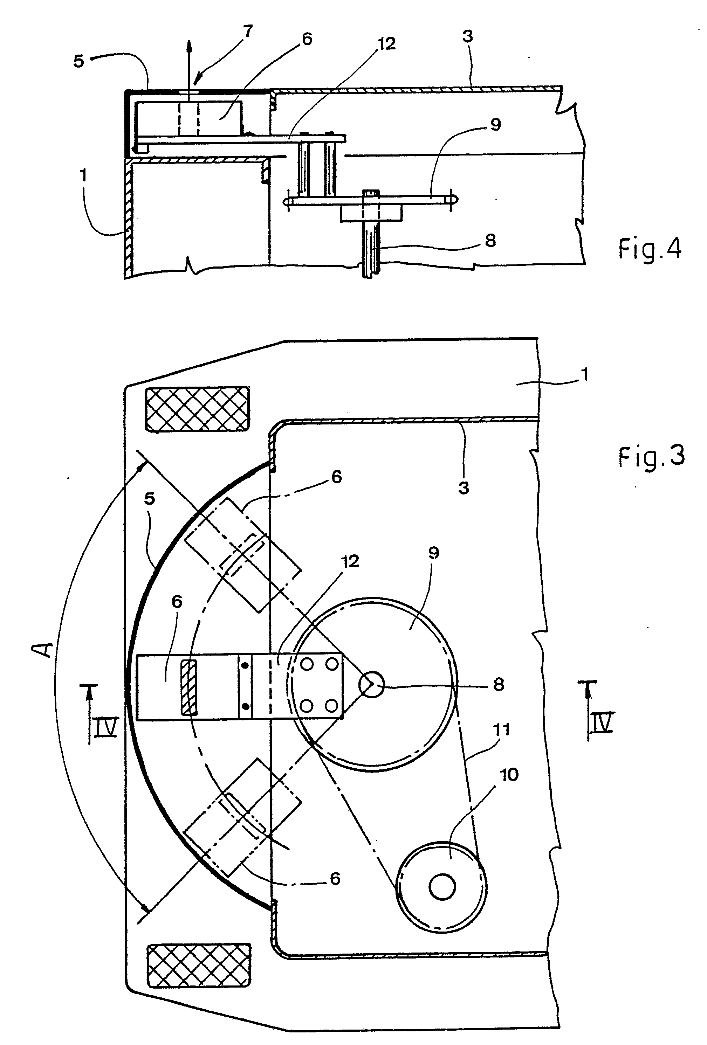

8 denotes the steering pivot shaft (figs 3 and 4), which carries a keyed sprocket 9 driven from a further sprocket 10, keyed to a geared motor, by way of a chain 11; 12 denotes a radial arm fixed to the driven sprocket 9, which carries the emitter 6.

13 denotes the retroreflecting strip, which according to the invention is fitted to an overhead support.

'A' denotes the horizontal swing angle permitted to the radial arm 12, which will be wide enough to accomodate the changes of direction envisaged, for example 90°.

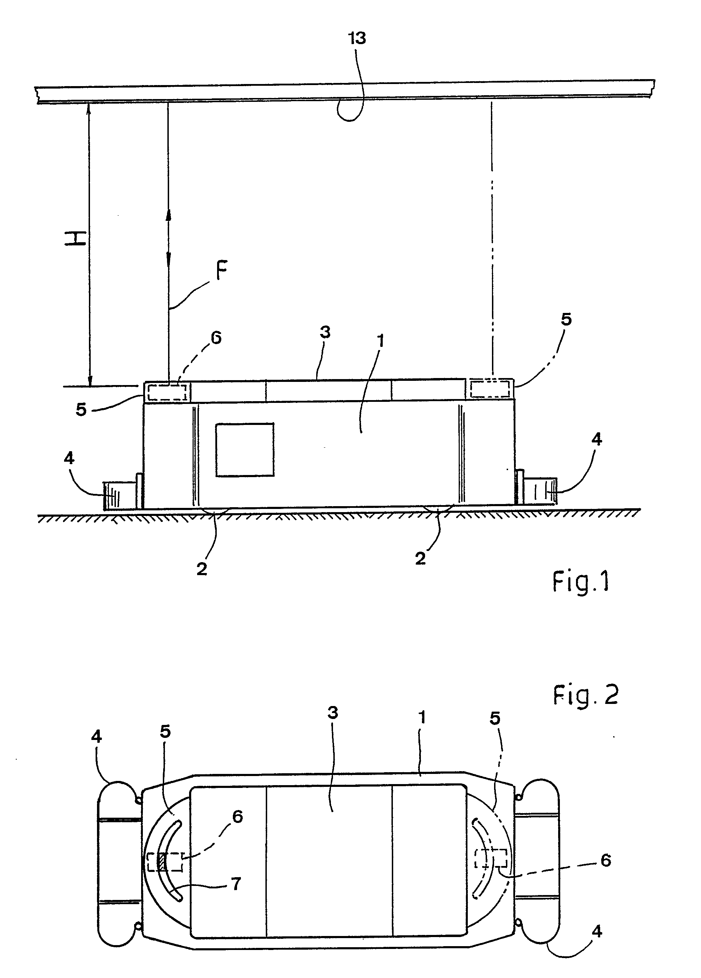

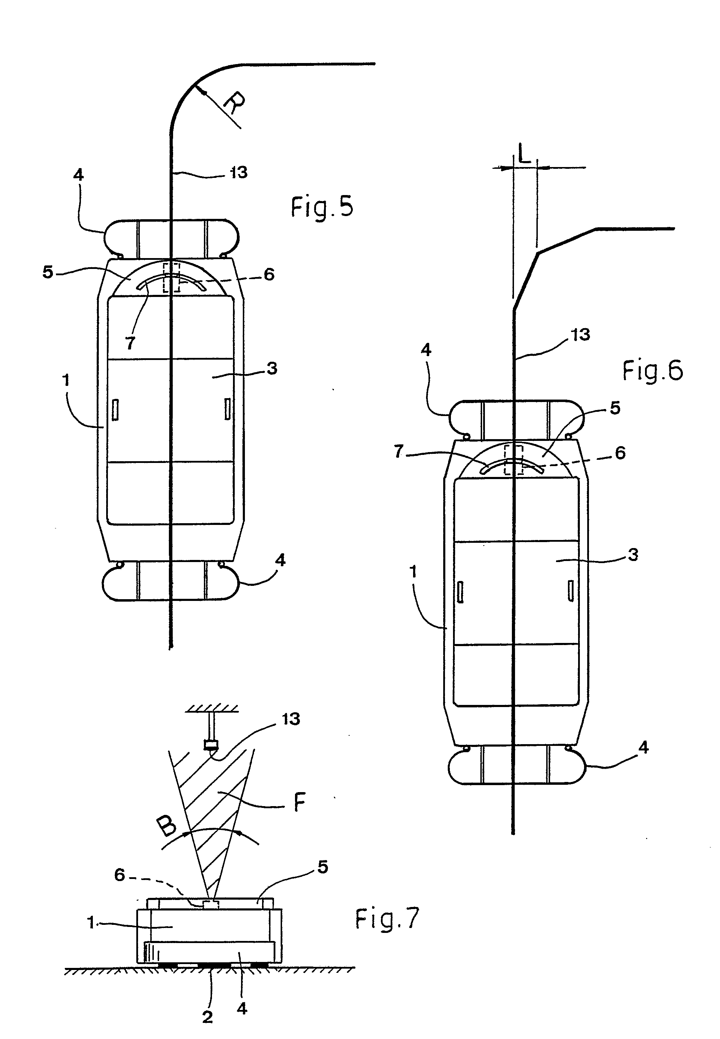

In figs 1 and 7, 'F' denotes the laser beam, which is made to oscillate within a vertical plane and at a given frequency, say f = 20 Hz, through a given angle denoted 'B', the amplitude of which will be dependent upon the degree of control required over the retroreflecting strip 13; for example, the angle could be as wide as 90°.

'H' denotes the height of the strip 13 from the emitter 6, which might advantageously be 5 metres and more; 'R' denotes the radius of curvature accompanying a circular change in direction, which can be as tight as 50 cm. 'L' denotes the transverse displacement through one leg of a dog-legged change in direction, which may be less even than 25 cm.

S1 denotes a first type of turnout (or junction) in which the retroreflecting strip 13 laying up-line of the turnout presents a widened stretch 14, say twice the width of the remainder, and the two down-line strips incorporate similarly widened stretches 15 and 16. 'I' denotes a right angle crossing between two strips 13, of which the four members exhibit respective widened stretches 17 equidistant from the intersection.

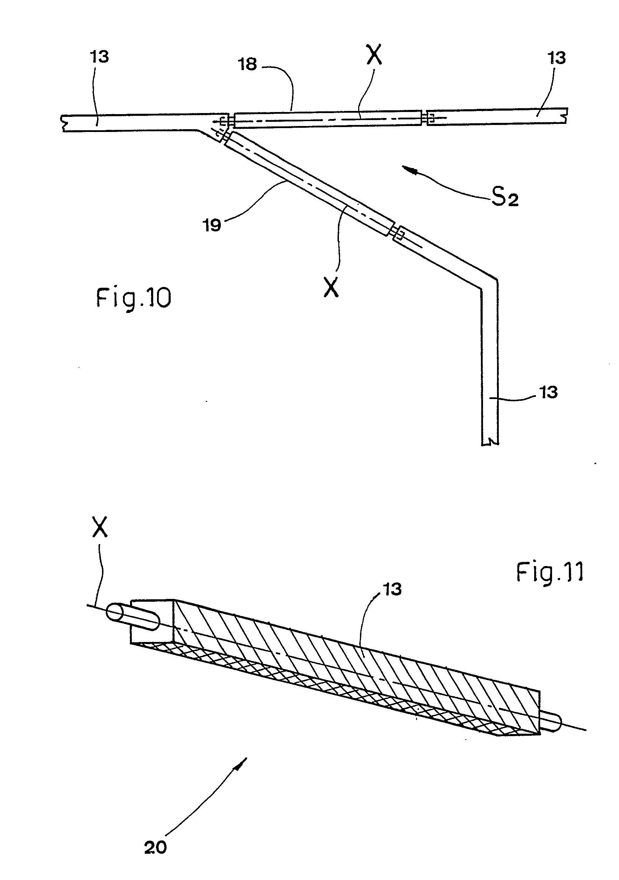

S2 (fig 10) denotes a second type of turnout in which each of the two down-line stretches 18 and 19 consists in a prismatic element 20, for example of square or rectangular cross section, rotatable about its own longitudinal axis 'X'; one face of the rotatable element 20 carries a stretch of the retroreflecting strip 13, whereas one of the adjoining faces on either side is finished in a dark non-reflecting colour, for instance black.

Operation of the invention will now be described.

The oscillating beam F from the emitter 6 is reflected downward by the retroreflecting strip 13 and invests a sensor fitted to the emitter and wired into a microprocessor, which calculates the position of the truck 1 in relation to to the strip on the basis of the angle of incidence of the reflected beam and corrects the steering gear, if necessary, to bring the truck into alignment.

The first type of branch S1 and the right angle crossing I are utilized when there is a prescribed route (programmed into the microprocessor) that the truck must be made to follow.

As the truck approaches the turnout S1, for example coming from up-line, the laser beam F encounters the widened stretch of the strip, the duration of the return signal is increased, and a procedure is triggered internally of the microprocessor that manoeuvres the truck 1 onto one of the two branched lines as programmed; the widened stretch 15 or 16 of the selected line is then similarly encountered and the length of the return signal again increased, thereby instructing termination of the manoeuvre.

For example, when the laser beam F is returned by the widened stretch 14 during the truck's approach, the microprocessor will instruct a reduction in ground speed, deactivate the emitter 6, and direct the truck onto the selected line according to a prescribed sequence. Once the truck reaches a set distance beyond the turnout, prior to coinciding vertically with the relative widened stretch 15 or 16, the emitter 6 will be reactivated by the microprocessor; accordingly, when the beam F is returned by the stretch 15 or 16 in question, the change in signal duration has the effect of terminating the manoeuvre and the truck 1 is restored to normal ground speed.

As in the case of the branch S1, the approach of the truck toward the crossing I causes the laser beam F to encounter a first widened stretch 17 and thus trigger the manoeuvre procedure internally of the microprocessor; with the truck then past the intersection, the beam will encounter one of the three remaining widened stretches 17 and the manoeuvre procedure terminate.

For example, if the truck is to turn right at the crossing, the interaction of the beam F and the first widened stretch 17 will trigger the internal command at the microprocessor which reduces ground speed; the beam F then encounters the second route converging to the crossing, and a further variation in the return signal triggers an internal procedure whereby the microprocessor will instruct the truck to stop in a central position, steer right into alignment with the new direction selected, and restart at low speed along the new route. Finally, the beam F encounters the widened stretch 17 on the new route leaving the crossing, whereupon the manoeuvring procedure terminates and the truck resumes normal ground speed.

The second type of branch S2 can be used in cases where the truck is to be manoeuvred in a direction selected ad hoc by the operator.

As the truck approaches the branch S2, the operator causes one of the two down-line stretches 18 and 19 to rotate about its axis, in such a way that the stretch lying on the route to be taken by the truck (for example, that denoted 18), is positioned with the retroreflecting strip 13 facing downwards whereas the remaining stretch 19 is positioned with its non-reflecting dark face downwards.

Given that the laser beam F can be returned only by the retroreflecting stretch 18, the truck 1 will be steered automatically onto the corresponding line of the branch S2.

Claims

1) An automatic guidance system for internal transport trucks in industry, using overhead retroreflector strip control and comprising a retroreflecting strip of which the the distance and position from and in relation to the guided truck are determined by a microprocessor designed to measure the reflected signal of a laser beam directed to the strip from a laser emitter associated with the steering gear of the truck, characterized in that the retroreflecting strip (13) is applied to an overhead support in vertical alignment with the truck (1) along a predetermined route, at a height of as much as 5 metres and more.

2. A system as in claim 1, wherein the route followed by the retroreflecting strip (13) incorporates at least one turnout (S1) of which each member up-line and down-line exhibits a widened stretch (14, 15, 16) of the retroreflecting strip located at a prescribed distance from the junction of the members and serving to activate and deactivate a manoeuvring procedure memorized internally of the microprocessor.

3. A system as in claim 1, wherein the route followed by the retroreflecting strip (13) incorporates at least one right angle crossing (I) of which each of the four members exhibits a widened stretch (17) of the retroreflecting strip located at a prescribed distance from the intersection of the members and serving to activate and deactivate a manoeuvring procedure memorized internally of the microprocessor.

4. A system as in claim 1, wherein the route followed by the retroreflecting strip (13) incorporates at least one branch (S2) of which each member down-line of the junction exhibits a stretch (18, 19) consisting in a prismatic element (29) rotatable about its own longitudinal axis (X), of which one face carries a length of the retroreflecting strip (13), and the face next adjoining in the direction of rotation is dark and non-reflecting.

5. A truck as in claim 1, comprising a laser emitter (6) installed above the front and/or rear steering gear (8), mounted to a radial arm (12) extending forward in relation to the direction of transport and rotatable through a horizontal arc (A), wherein the beam (F) from the emitter is directed vertically through a bowed slot (7) afforded by the top of a cowling (5) accomodating the emitter (6), and reflected by the retroreflecting strip (13) in such a way as to transmit instructions automatically to the steering gear by way of the microprocessor.

Fig.1

Fig. 2

Fig.4

Fig.3

Fig. 5

Fig. 6

Fig. 7

Fig.8

Fig.9

Fig.10

Fig.11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN vol. 9, no. 2(P-325)(1725), 8th January 1985; & JP - A - 59 153 211 (TSUBAKIMOTO) 01-09-1984 --- | 1 | G 05 D 1/03 B 62 D 1/28 |
| A | PATENT ABSTRACTS OF JAPAN vol. 9, no. 44 (P-337)(1767), 23rd February 1985; & JP - A - 590184917 (TSUBAKIMOTO) 20-10-1984 --- | 1 | |
| A | PATENT ABSTRACTS OF JAPAN vol. 10, no. 106 (P-449)(2163), 22nd April 1986; & JP - A - 60 237 508 (TOSHIHIRO TSUMURA), 26-11-1985 --- | 1 | |
| A | GB-A-2 186 398 (YOSHIDA) * abstract; page 3, lines 70-74; 89-99; figures 2-5, 8-13 * --- | 2 | |
| A | PATENT ABSTRACTS OF JAPAN vol. 10, no. 89 (P-444)(2146), 8th April 1986; & JP - A - 60 225 208 (TOSHIBA) 09-11-1985 --- | 2 | TECHNICAL FIELDS SEARCHED (Int. Cl.5) G 05 D 1/00 |
| A | PATENT ABSTRACTS OF JAPAN vol. 10, no. 147 (P-460)(2204), 29th May 1986; & JP - A - 61 000 817 (FUJI SHIYARIYOU), 06-01-1986 --- | 2 | |
| A | PATENT ABSTRACTS OF JAPAN vol. 10, no. 290 (P-503)(2346), 2nd October 1986; & JP - A - 61 110 208 (DAIFUKU) 28-05-1986 --- -/- | 2 | |

The present search report has been drawn up for all claims

| Place of search | Date of completion of the search | Examiner |
|---|---|---|
| BERLIN | 09-06-1989 | BEITNER M.J.J.B. |

EPO FORM 1503 03.82 (P0401)

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN vol. 11, no. 2 (P-532)(2449), 6th January 1987; & JP - A - 61 180 312 (TOSHIBA) 13-08-1986 --- | 3 | |
| A | DE-A-2 949 204  (MATRA) * page 12, line 12 - page 14, line 13; figures 8-12 * --- | 2,3 | |
| A | PATENT ABSTRACTS OF JAPAN vol. 11, no. 32 (P-451)(2479), 30th January 1987; & JP - A - 61 202 208 (MURATA MACH) 08-09-1986 --- | 2 | |
| A | EP-A-0 012 554  (LEAR SEGLER) * page 5, line 32 - page 7, line 19; page 15, lines 24-32; claims 1-5,13; figures 2,5,9,16 * ----- | 5 | |

TECHNICAL FIELDS
SEARCHED (Int. Cl.5)

The present search report has been drawn up for all claims

| Place of search | Date of completion of the search | Examiner |
|---|---|---|
| BERLIN | 09-06-1989 | BEITNER M.J.J.B. |

EPO FORM 1503 03.82 (P0401)